# EUROPEAN PATENT SPECIFICATION

(11) **EP 3 997 349 B1**
(45) Date of publication and mention of the grant of the patent: **18.02.2026**
(21) Application number: 20840935.9
(22) Date of filing: 14.07.2020
(51) Int. Cl.: F16B 39/36, F16B 39/284

(54) **FASTENER AND FASTENER ASSEMBLY HAVING VIBRATIONAL RESISTANCE AND IMPROVED TORQUE TO CLAMP FORCE CORRESPONDENCE**
BEFESTIGUNGSVORRICHTUNG UND BEFESTIGUNGSANORDNUNG MIT VIBRATIONSBESTÄNDIGKEIT UND VERBESSERTEM DREHMOMENT GEGENÜBER KLEMMKRAFTENTSPRECHUNG
ENSEMBLE DE FIXATION ET FIXATION AYANT UNE RÉSISTANCE VIBRATOIRE ET UN COUPLE AMÉLIORÉ POUR UNE CORRESPONDANCE DE FORCE DE SERRAGE

(30) Priority: 14.07.2019 US 201962873960 P
(43) Date of publication of application: 18.05.2022
(73) Proprietor: DuraForce Holdings, LLC, Roanoke VA 24037 (US)
(72) Inventor: DIONNE, Pierre, A., Roanoke, VA 24037 (US)
(74) Representative: Serjeants LLP
(86) International application number: PCT/US2020/041936
(87) International publication number: WO 2021/011539

(56) References cited:
- EP-A1- 0 066 794
- EP-A1- 2 799 729
- CN-A- 109 882 490
- US-A- 5 161 928
- US-A1- 2013 266 396
- US-A1- 2013 266 396
- US-B1- 6 220 801

## Description

### CROSS-REFERENCE TO RELATED APPLICATION

This application claims the benefit of priority of U.S. provisional patent Application No. 62/873,960, titled "Fastener and Fastener Assembly Having Improved Vibrational and Tightening Characteristics," filed on July 14, 2019.

### TECHNICAL FIELD

This disclosure is related to a fastener and fastener assembly, and, more particularly, towards a fastener and fastener assembly having resistance to loosening under vibration and having improved torque to clamp force correspondence.

### BACKGROUND

Fasteners and various fastener assemblies are utilized for securing one or more articles to one another in a variety of settings including commercial, residential, industrial, and the like. These fasteners may be, for example, a nut and bolt assembly in which a threaded portion of the bolt is received within a cooperatively threaded portion of the nut. Nut and bolt assemblies are preferred because of their uniformly accepted use, cost-efficient manufacturing, and acceptable performance in a variety of settings.

Conventional nuts and bolts are susceptible to loosening under vibrational and other loads. Many manners have been introduced in order to combat the vibrational and other forces. For example, some users may provide multiple nuts that are tightened against each other in order to increase the total frictional forces between the nuts and the bolt. Other manners include the use of a split washer having one portion raised relative to the other, i.e. a spring washer, the acts to provide a spring bias to absorb vibrational forces acting on the nut.

Still other manners have been provided for increasing the effectiveness of traditional fasteners such as nuts and bolts. For example, fasteners having multiple-part assemblies have been employed. However, these fastener assemblies have increased cost and may not always have desired effectiveness.

Document US 2013/0266396 A1 discloses a fastener assembly having improved vibrational and tightening characteristics.

A need therefore exists for a solution that addresses these disadvantages.

### SUMMARY

This summary is provided to briefly introduce concepts that are further described in the following detailed descriptions. This summary is not intended to identify key features or essential features of the claimed subject matter, nor is it to be construed as limiting the scope of the claimed subject matter. The present invention is directed to a vibration resistant fastening system according to claim 1.

According to various embodiments, a vibration resistant fastening system is useful, as a non-limiting example, for attaching a working surface to a threaded stud, the stud extending longitudinally through a hole defined through the working surface. The fastening system includes: a nut including a forward annulus, a rearward head, and a staged interior bore extending longitudinally through the head and annulus, the head including a threaded interior for engaging the threaded stud, the threaded interior of the head defining a rearward section of the staged bore. The annulus includes: an exterior including a cylindrical portion extending longitudinally forward from the head, and a tapered portion extending longitudinally forward from the cylindrical portion; at least one smooth cylindrical interior wall defining a forward section of the staged bore forward of said rearward section defined by the threaded interior of the head; and multiple slots, extending longitudinally along the annulus, each defined through the annulus from the exterior thereof to the stage bore.

The multiple slots may extend from a forward end of the annulus to the head, such that the annulus is divided into part-annular portions.

The multiple slots may include exactly two diametrically opposed slots.

The exterior of the annulus may further a cylindrical forward terminal end portion extending longitudinally forward from the tapered portion.

The at least one smooth cylindrical interior wall that defines a forward section of the stage bore may extend longitudinally along the terminal end portion of the annulus and a forward portion of the tapered portion of the annulus.

A second smooth cylindrical interior wall, defining an intermediate section of the staged bore, may extend within the annulus rearward of the at least one smooth cylindrical interior wall and forward of the head.

The at least one smooth cylindrical interior wall may have a greater inner diameter than that of the second smooth cylindrical interior wall.

The vibration resistant fastening system may further include a collar for distributing force from the nut to the working surface. The collar includes: a forward end including an annular forward contact surface for contacting the working surface around the hole through which the stud extends; and a rearward end including an annular rearward contact surface for contacting a forward contact surface of the head of the nut.

In use, advance of the annulus into the collar causes tensional force in the bolt to apply clamping force to the working surface.

Upon advance of the annulus into the collar, the annulus contacts an interior ring of the collar as the nut is turned on the threaded stud and undergoes an inward deflection due to a radial force applied by the collar to the annulus.

The forward contact surface of the head of the nut may be annular and planar.

The forward contact surface of the head of the nut may extend laterally outward relative to the exterior cylindrical portion of the annulus.

The entire forward contact surface of the collar may transfer tensional force applied by the stud to compressional force upon the working surface around the hole through which the stud extends.

The collar may further include an interior ring extending inward to engage the annulus of the nut in use.

The nut may include a flange intermediate, and extending laterally outward relative to, the annulus and head.

The exterior of the annulus may further include a tapered forward terminal end portion extending longitudinally forward from said tapered portion, such that the annulus has a forward staged outer taper. Said tapered portion may have a taper angle that is less than a taper angle of the forward terminal end portion.

The above summary is to be understood as cumulative and inclusive. The above described embodiments and features are combined in various combinations in whole or in part in one or more other embodiments.

### BRIEF DESCRIPTION OF THE DRAWINGS

The previous summary and the following detailed descriptions are to be read in view of the drawings, which illustrate particular exemplary embodiments and features as briefly described below. The summary and detailed descriptions, however, are not limited to only those embodiments and features explicitly illustrated.
FIG. 1A is a perspective view of a fastener system according to at least one embodiment, shown mounted on the threaded end of a bolt shank as in use.
FIG. 1B is an elevation view of the fastener system of FIG. 1A.
FIG. 2 is a cross-sectional view of the fastener system taken along the line 2-2 in FIG. 1B.
FIG. 3A is a forward end perspective view of the improved nut of the fastener system of FIG. 1A.
FIG. 3B is a rearward end perspective view of the improved nut of FIG. 1A.
FIG. 3C is a longitudinal view of the annulus end of the improved nut of FIG. 1A.
FIG. 4A is a rearward end perspective view of the improved collar of the fastener system of FIG. 1A.
FIG. 4B is a forward end perspective view of the improved collar of FIG. 1A.
FIG. 5 is a cross-sectional view of a fastener system of the prior art, shown mounted on the threaded end of a bolt shank as in use.
FIG. 6 is a plot of Force Reaction (N) as a function of Displacement (mm) for the fastener system of FIG. 5 according to Finite Element Analysis modeling.
FIG. 7 is a plot of Force (lbs.) as a function of Vertical Displacement of Nut (inches) for the fastener system of FIG. 1A according to Finite Element Analysis (FEA) modeling.
FIG. 8 is cross sectional view of a modeled portion of the for the fastener system of FIG. 1A in the modeling for the Mesh 2 plot of FIG. 7.
FIG. 9 is a plot of Torque (ft-lbs.) as a function of Axial Displacement (inches) for the fastener system of FIG. 1A according to Finite Element Analysis (FEA) modeling.
FIG. 10 shows an alternative fastener system mounted on a threaded bolt and installed to apply a clamping force to join two plate elements.
FIG. 11A is a longitudinal view of an alternative fastener system having at least two examples as shown in FIGS. 11B and 11C.
FIG. 11B is a cross-section view of a fastener system as in FIG. 11A, according to a first example thereof, taken along the line 11BC-11BC in FIG. 1A.
FIG. 11C is a cross-section view of a fastener system as in FIG. 11A, according to a second example thereof, taken along the line 11BC-11BC in FIG. 1A.
FIG. 12A is a longitudinal view of the annulus end of the improved nut of FIG. 1A shown with non-limiting dimensions (inches) for example purposes.
FIG. 12B is a cross-sectional view of the nut taken along the line 12B-12B in FIG. 12A shown with non-limiting dimensions (inches, degrees) for example purposes.
FIG. 12C is an enlarged view of a portion 12C of the nut of FIG. 12B.
FIG. 12D is a further enlarged view of a portion 12D of the portion shown in FIG. 12 C.
FIG. 13A is a longitudinal view of the forward end of the improved collar of FIG. 1A, with a non-limiting outer diameter dimension (inch) for example purposes.
FIG. 13B is a cross-sectional view of the collar taken along the line 13B-13B in FIG. 13A shown with non-limiting dimensions (inches, degrees) for example purposes.
FIG. 14A is a forward end perspective view of an improved nut according to at least one embodiment, having at least alternative annulus dimensions and an additional flange.
FIG. 14B is a rearward end perspective view of the improved nut of FIG. 14A.
FIG. 15A is a longitudinal view of the annulus end of the improved nut of FIG. 14A shown with a non-limiting dimension (inch) for example purposes.
FIG. 15B is a cross-sectional view of the nut taken along the line 15B-15B in FIG. 15A shown with non-limiting dimensions (inches, degrees) for example purposes.
FIG. 15C is an enlarged view of a portion 15C of the nut of FIG. 15B.

### DETAILED DESCRIPTIONS

These descriptions are presented with sufficient details to provide an understanding of one or more particular embodiments of broader inventive subject matters. These descriptions expound upon and exemplify particular features of those particular embodiments without limiting the inventive subject matters to the explicitly described embodiments and features. Considerations in view of these descriptions will likely give rise to additional and similar embodiments and features without departing from the scope of the inventive subject matters. Although steps may be expressly described or implied relating to features of processes or methods, no implication is made of any particular order or sequence among such expressed or implied steps unless an order or sequence is explicitly stated.

Any dimensions expressed or implied in the drawings and these descriptions are provided for exemplary purposes. Thus, not all embodiments within the scope of the drawings and these descriptions are made according to such exemplary dimensions. The drawings are not made necessarily to scale. Thus, not all embodiments within the scope of the drawings and these descriptions are made according to the apparent scale of the drawings with regard to relative dimensions in the drawings. However, for each drawing, at least one embodiment is made according to the apparent relative scale of the drawing.

Like reference numbers used throughout the drawings depict like or similar elements. Unless described or implied as exclusive alternatives, features throughout the drawings and descriptions should be taken as cumulative, such that features expressly associated with some particular embodiments can be combined with other embodiments.

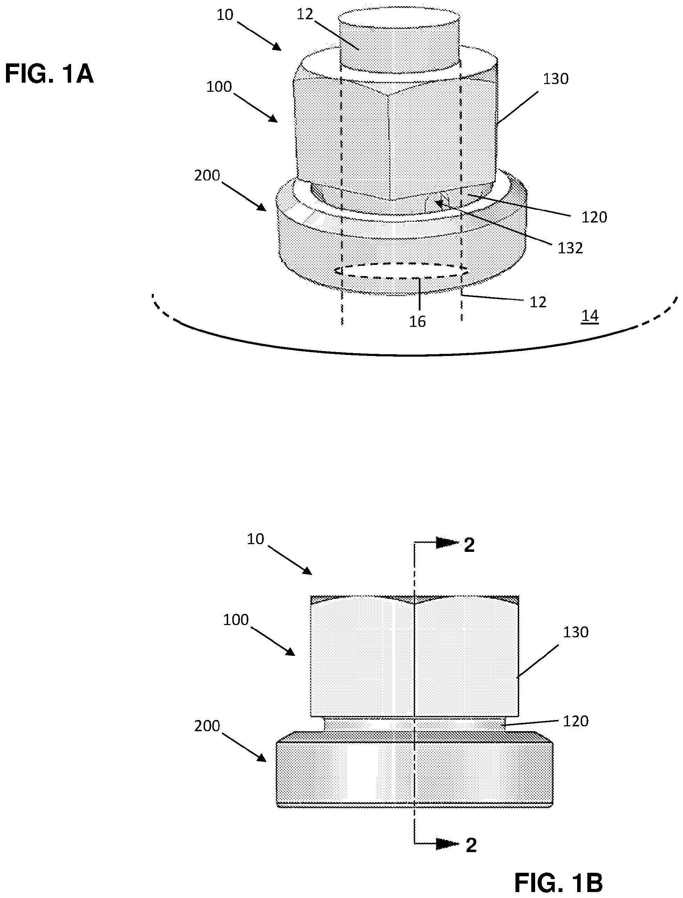

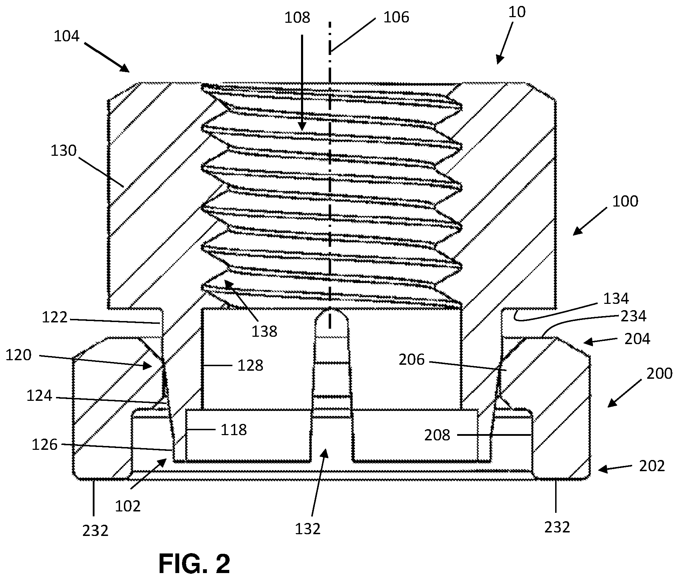

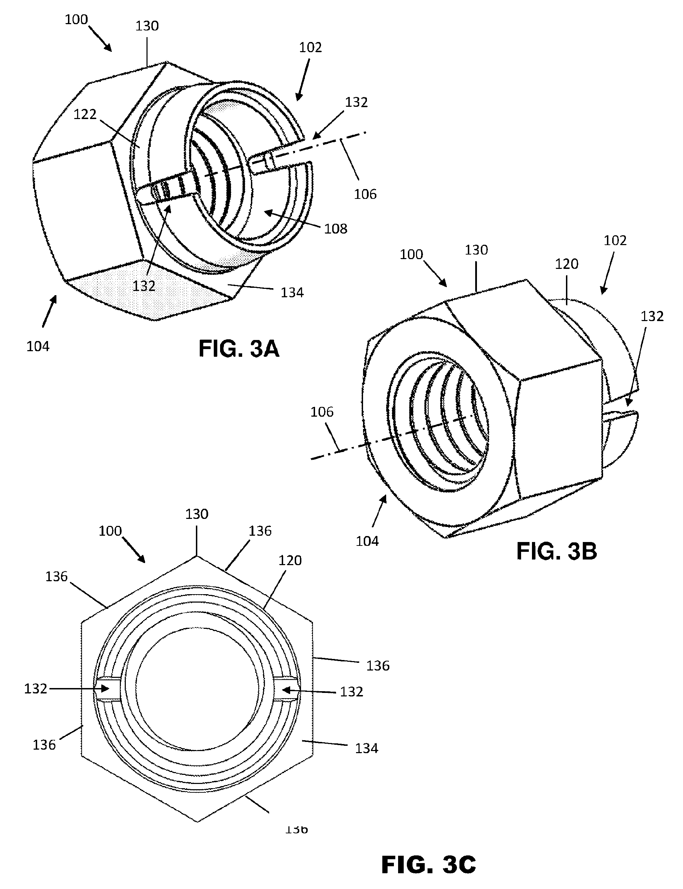

FIG. 1A is shows a fastener system 10 according to at least one embodiment, shown mounted on the threaded shank of a bolt 12 as in use. The fastener system 10 includes a nut 100 and collar 200 that together mount on a threaded end of a bolt as shown. **In** at least one exemplary use, the nut and collar secure a shaft flange to a hub for mounting a wheel on a vehicle such as an automotive truck. As shown in FIGS. 2 and 3A-3B, the nut 100 generally extends from a longitudinal first end 102 to a longitudinal second end 104 thereof around a longitudinal axis 106. The first end 102, which terminates as a slotted circular ring, may be termed also herein as the forward end of the nut, and the second end 104 may be termed also as the rearward end of the nut.

The first end 102 is defined by an annulus 120 having an exterior rearward cylindrical portion 122, an exterior tapered intermediate portion 124 extending forward from the cylindrical portion 122, and an exterior cylindrical forward terminal end portion 126 (FIG. 2) extending forward from the tapered intermediate portion 124, which are all coaxially aligned.

The second end 104 is defined by a head 130 by which the nut can be engaged by a tool and rotated around the longitudinal axis. The head 130 extends rearward from the cylindrical portion 122 of the annulus opposite the tapered intermediate portion 124. A staged bore 108, of which the annulus 120 and head 130 provide respective coaxially aligned bore sections, is defined through the nut 100 around the longitudinal axis 106. **In** the illustrated embodiment, the second or rearward end 104 of the nut 100 is open. **In** other embodiments, the second or rearward end may be capped or domed. The first or forward end 102 of the nut 100 is open to receive the shank of a threaded stud or bolt.

The head 130 has outer engagement surfaces 136 (FIG. 3C) for engaging a tool for rotation of the nut 10. The head 130 is shown as a hex (six-sided) head in the illustrated embodiment for engaging already available tools. The head may be otherwise configured as having more or less than the six engagement surfaces 136 illustrated as planar sides (FIG. 3C), and may have other shapes other than that illustrated in other embodiments within the scope of these descriptions. The head 130 is generally wider (referring to lateral or radially extending dimensions perpendicular to the longitudinal axis 106) than the annulus 120.

Forward and rear edges of the nut 100 and its constituent portions, both external and internal, may be beveled, for example to ease entry of a threaded stud into the bore 108 at the forward end 102 (internal beveling) and entry of the forward end 102 (external beveling) into a recessed hole in a working surface.

The outer surface of the tapered intermediate portion 124 of the annulus 120 may be frustoconical from the cylindrical forward terminal end portion 126 to the cylindrical portion 122, and thus may have a uniform taper angle along the entire outer surface thereof.

The head 130 has an annular forward contact surface 134 for bearing force, in use, for example on the collar 200 or a working surface in an arrangement in which the collar 200 is not used. The contact surface 134 is illustrated as planar, extending laterally or radially outward relative to the cylindrical portion 122 of the annulus 120. No portion of the annulus 120 extends radially outward further than the any portion of the head 130 in the illustrated embodiment.

The head 130 is fixed to the cylindrical portion 122 of the annulus 120 distal or opposite the tapered terminal end portion 124. The nut 100 may be of a one-piece unitary construction, as illustrated, formed of contiguous durable material, such as, according to at least one non-limiting example, cold rolled steel, and may have a black oxide or other finish.

In the illustrated embodiment, the cylindrical forward terminal end portion 126 and a forward portion of the tapered intermediate portion 124 together have a first or forward smooth cylindrical interior wall 118 (FIG. 2), defining a first or forward section of the staged bore 108. A second or rearward smooth cylindrical interior wall 128, defining a second or intermediate section of the staged bore 108, is defined within the annulus rearward of the first or forward smooth cylindrical interior wall 118 and forward of the head. The forward smooth cylindrical interior wall 118 has a greater inner diameter than that of the rearward smooth cylindrical interior wall 128. The forward smooth cylindrical interior wall 118 is beneficial to be swaged outward to retain a collar 200 to unitize the collar and nut with the collar being free spinning relative to the nut.

The interior of the head 130, which defines a third or rearward section of the staged bore 108, is threaded as shown in FIG. 2. The threads 138 of the internally threaded head 130 may be coarse, fine, or may have any desired thread configuration, for engaging a threaded bolt.

Two diametrically opposed slots 132 (FIG. 3A) extend longitudinally along the annulus 120, from the exterior thereof to the interior or bore 108. In the illustrated embodiment, the slots extend from the forward end 102 to the head 130, such that each portion of annulus, including the terminal end portion 126, the tapered intermediate portion 124, and the cylindrical portion 122, is divided into two part-circular or part annular portions.

As shown in FIG. 1A, the vibration resistant nut 100 in use attaches a working surface 14 to a threaded stud 12, the stud 12 extending through a hole 16 defined through the working surface. The nut 100 includes an annulus that receives the stud, the annulus including a cylindrical portion 122 (FIG. 2) and a tapered portion 124 extending from the cylindrical portion. The tapered portion 124 has an outer surface that narrows diametrically from the cylindrical portion.

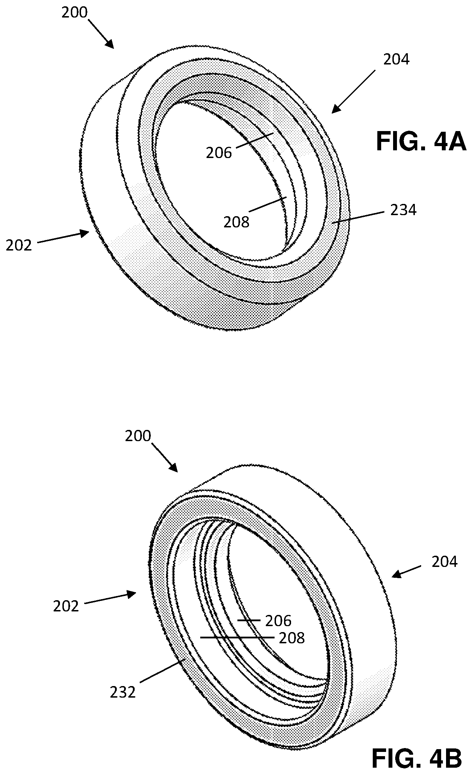

The collar 200 is shown in perspective views in FIGS. 4A and 4B, and in cross sectional view in FIG. 2. The exterior of the collar 200 is cylindrical with beveled edges. The first or forward end 202 has a cylindrical smooth interior wall 208. The second or rearward end 204 of the collar 200 has an interior ring 206 that extends inward to engage the annulus 120 in use. Forward and rear edges of the collar 200 and its constituent portions, both external and internal, may be beveled as shown, for example to ease entry of the annulus 120 of the nut 100 when being installed.

The collar 200 has a planar annular rearward contact surface 234 at the rearward end 204 for contacting the forward contact surface 134 of the head 130. When the tapered portion 124 of the annulus 120 contacts the interior ring 206 of the collar 200 as the nut 100 is turned on threaded bolt, the annulus 120 undergoes an inward deflection due to engineered dimensional conflict and the radial force thereby applied by the ring 206. As the nut 100 is driven further toward the collar 200, the cylindrical portion 122 passes into the interior of the ring 206 until the contact surfaces 134 and 234 are pressed into contact at the full seating of the nut 100 and collar 200.

The advance of the annulus into the collar, and the seating thereof, causes tensional force in the bolt 12 to apply clamping force in a joint. The collar 200 has a planar annular forward contact surface 232 at the forward end 202 for contacting a working surface around a through hole such as a hole in a shaft flange or other plate element by which a wheel is mounted on a hub on a vehicle such as an automotive truck, as a non-limiting example of use. The entire forward contact surface 232 of the collar 200 transfers the tensional force applied by the bolt to compressional force upon the working surface around such a through hole.

The exterior of the annulus 120 has the tapered portion 124, which first contacts the interior of the ring 206 of the collar, and then transitions to a cylindrical outer wall, with reference to the cylindrical portion 122, which extends parallel to a threaded bolt in use. The fastening system thus can attain a prescribed installation torque specification while achieving any desired level of clamp load within a joint. Moreover, this design allows the forward contact surface 134 of the head 130 of the nut 100 to seat on top of the collar 200, or a substrate or working surface in an arrangement in which the collar 200 is not used. thereby displacing the load bearing over the entire contact surface 134 of the head 130 of the nut 100.

The nut 100, with the cylindrical portion 122 defining the rearward portion of the annulus 120, and the cylindrical portion 122 having a cylindrical exterior parallel to the longitudinal axis 106 and threaded bolt shank upon which the nut is mounted in use, has an improved torque to clamp force correspondence or relationship as compared to a prior art fastener system having continually tapered annulus.

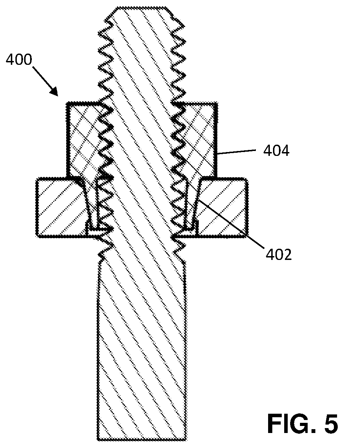

For example, the prior art nut 400 shown in FIG. 5 has an annulus 402 that is tapered along its whole length from the forward and of the head 404 of the nut to the forward tip of the annulus 402. The torque required to assemble the illustrated joint drastically increases as its substrates are compressed by nut rotation to generate a subsequent bolt stretch. Furthermore, this prior art design puts the absolute stress of the assembled joint entirely upon the compression tangent point at the outer wall of the annulus where it contacts the inner diameters or collars or through holes having conflicting angle tapers. This prior art design may not follow the accepted practices for the assembly of a standard nut and bolt which distributes the assembled load bearing over the entire the forward end of the nut when compressed against the substrate under load.

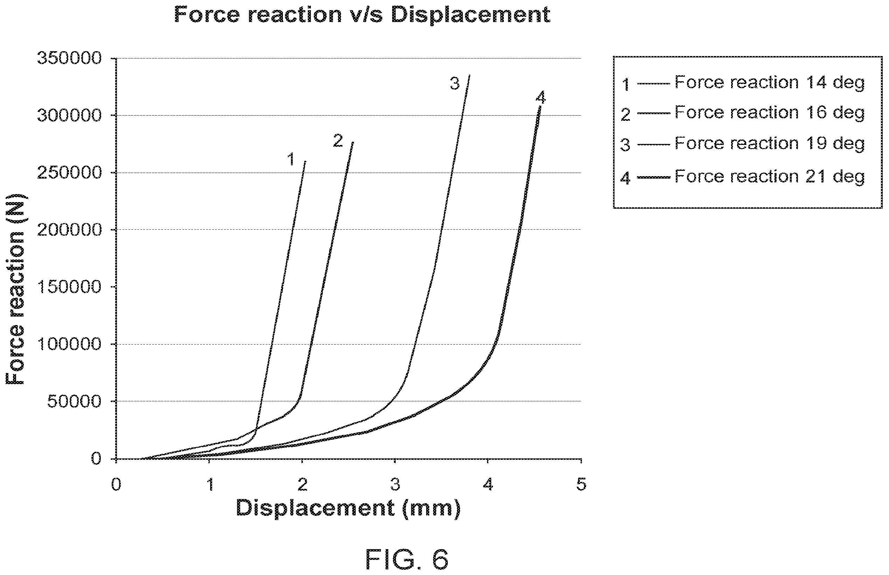

FIG. 6 plots of Force Reaction (N) as a function of Displacement (mm) for the fastener system of FIG. 5 according to Finite Element Analysis modeling. Respective plots for four angle differences between collar interior and tapered annulus are provided. From the plots primarily two observations can be made. The first being that the least force reaction is obtained for the lowest angle of the collar which corresponds to a low angle difference between collar and annulus and therefore lesser clamping force is required to close the joint.

However, another observation is that a displacement value can be ascertained for the bolt which will not lead to excessive stresses in the model. The 'knee' obtained for all the cases shows a tremendous increase in the value of the reaction force for a marginal increase in displacement of the bolt. Therefore, the knee is the point where the bolt and collar are in contact without the flange of the bolt cutting into the top of the collar.

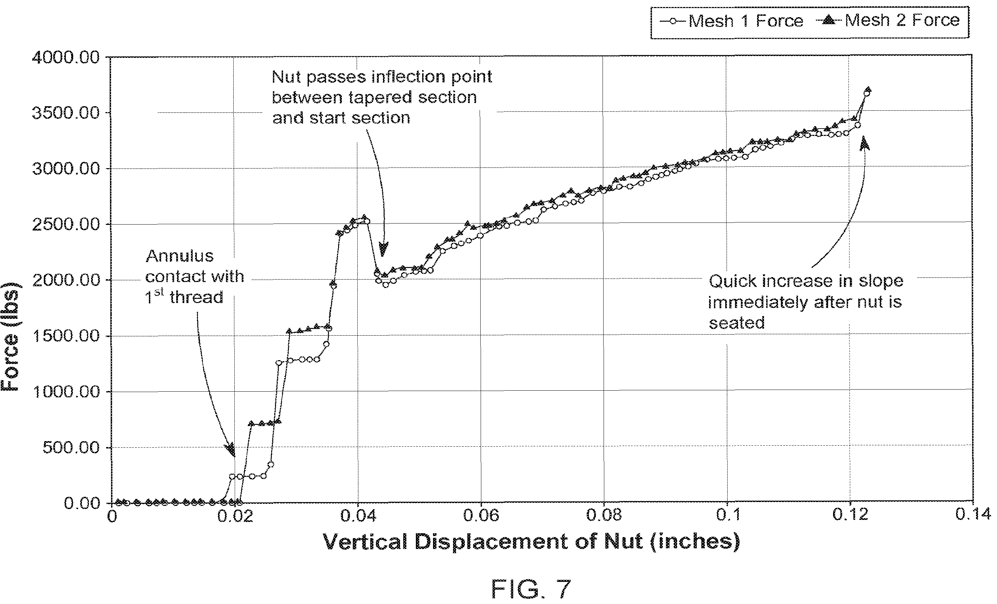

FIG. 7 plots Force (lbs.) as a function of Vertical Displacement of Nut (inches) for the improved fastener system 10 of FIG. 1A according to Finite Element Analysis (FEA) modeling. FEA modeling analysis was used to determine the torque necessary to seat the nut 100 for the improved nut and collar 200 design of the fastener system 10 given the axial load required to deflect the annulus until the nut is coincident with the collar and the added tangential frictional resistance of the annulus on the collar and the bolt threads. FIG. 7 plots Force (lbs.) as a function Vertical Displacement of Nut (inches) for the fastener system according to the FEA modeling.

A % symmetry model (25% or one quarter), a portion of which is shown in FIG. 7, was used to simulate the resistance to linear excursion of the nut along the axis of the bolt. Threads were included on the bolt, with the thread OD= 0.746". This is done in anticipation of the thread annulus coming in contact with the bolt thread. Frictional resistance at the base of the collar is assumed negligible for the purposes of the analysis. All other contacts were treated as frictional and allowed for separation, Coefficient of friction = 0.2. SAE Gr 8 Steel isotropic bilinear hardening properties was used for all components.

Two different mesh sizes were evaluated to ensure mesh-independence of the modeling results. Mesh 1 was composed of 40,450 solid elements, and Mesh 2 was composed of 64,333 solid elements. The respective modeling results for the two mesh sizes are plotted separately in FIG. 7. A swept mesh was used about the axis of each component, with some exceptions of various regions of the nut. Meshes were composed of predominantly linear hexahedral elements with a small number of linear pentahedral elements where necessary. No tetrahedral elements were used. Frictionless supports were used on all cut faces and bottom faces of the model. A linear deflection is applied to the inside face of the nut along the -Y direction: downward over 20 load steps. Total deflection is slightly larger than the initial gap between the top of the collar and the nut: 0.1223 inch.

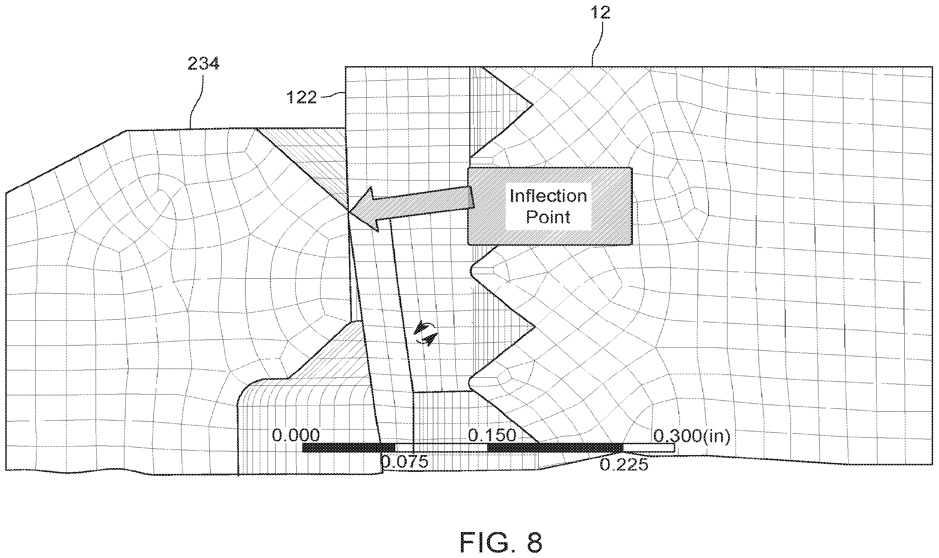

In FIG. 7, all results have been multiplied by four to account for the % symmetry model used. Both meshes show convergence in axial force required to deflect the nut after threads contact the annulus. Force results stay converged past the point where the vertical face on the outside of the nut comes in contact with the collar (see "Inflection Point" in FIG. 8) and is maintained through the increased displacements of the analysis. Axial force when the nut is seated = 3,440 lbs.

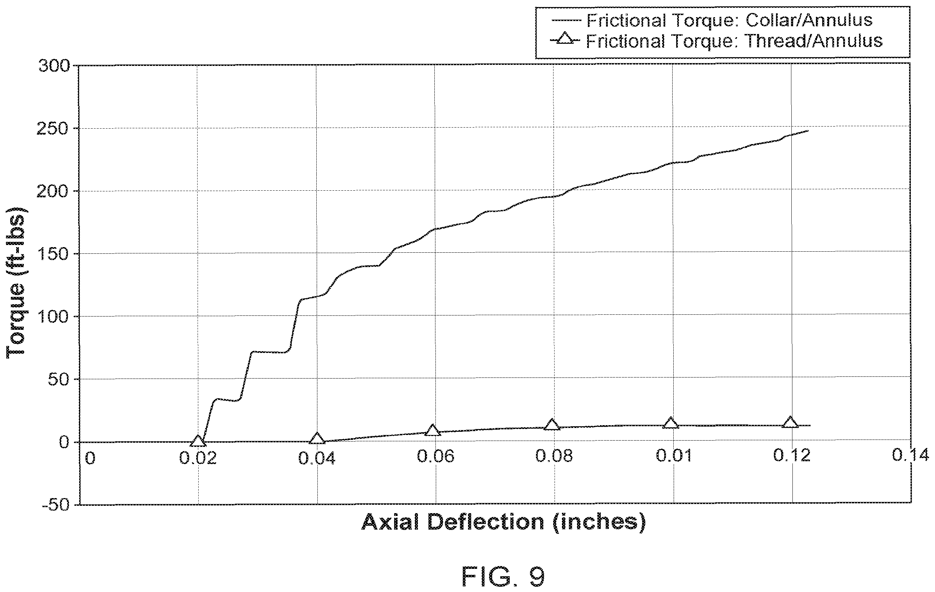

FIG. 9 plots Torque (ft-lbs.) as a function of Axial Displacement (inches), showing both frictional torque between the collar and annulus and the frictional torque between the thread of the bolt and annulus as respective plots. Based on a coefficient of friction of 0.2, and the radial reaction forces on the contacts between the collar and annulus and the collar and thread, a torque required to overcome friction of the annulus with those components can be estimated. The torque measured between the annulus and collar peaks at around 247 ft-lbs. The torque measured between the annulus and thread of the bolt is fairly inconsequential at 12 ft-lbs. These values are approximated using the collar ID of 0.944 and a bolt male-thread OD of 0.746 inch.

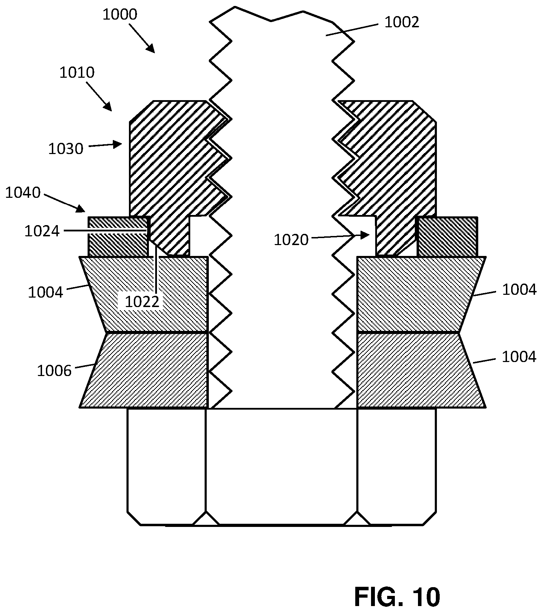

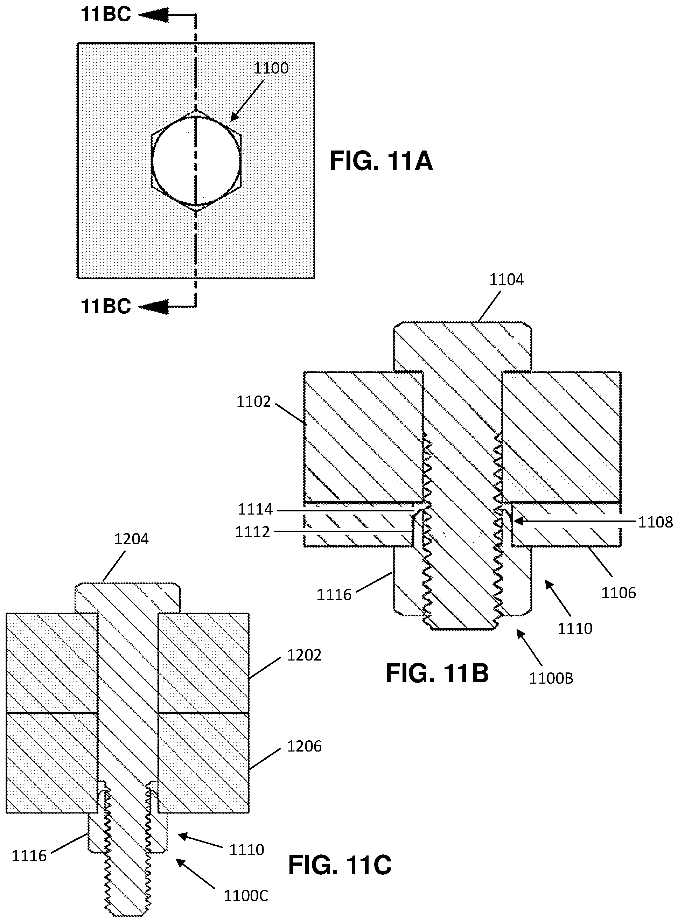

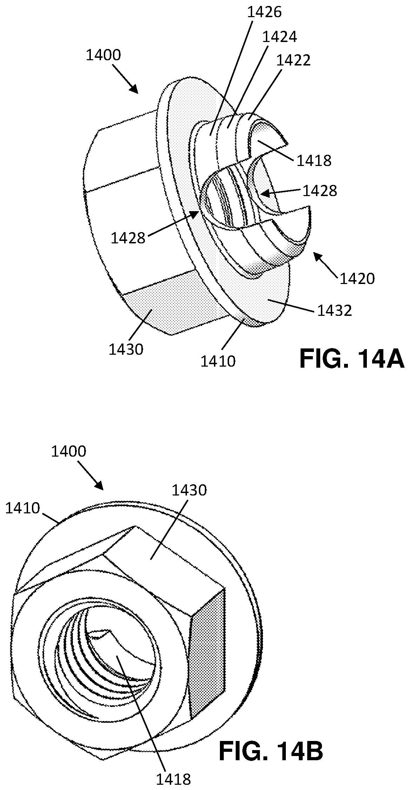

An improved torque to clamp force correspondence is provided by the nut 100 of the above described example, and by the additional or alternative inventive examples and embodiments described below, including the nut 1010 of FIG. 10, the nut 1110 of FIGS. 11B-11C, and the nut 1400 of FIGS. 14A-14B. Each has an annulus with a tapered portion forward of a rearward cylindrical portion connected to a head (FIGS. 10, 11B-11C) or intermediate flange (FIGS. 14A-14B). The rearward cylindrical portion of each annulus is parallel to the longitudinal axis of a threaded bolt on which the nut is mounted. The rearward cylindrical portion of the annulus seats within a collar or through hole to damp or prevent vibrational movement of bolt and nut thereby securing a joint against vibrational loosening, and does so with an improved torque to clamp force correspondence (see for example FIGS. 7 and 9) relative to prior art fastener systems with a continuously tapered annulus (see for example FIGS. 5 and 6).

Furthermore, whereas a prior art nut with a continuously tapered annulus (FIG. 5) puts the full clamp force of the assembled joint entirely upon the compression tangent point where the annulus contacts a collar or through hole, each of the inventive fastener systems illustrated and described herein distributes the load bearing or clamping force over an entire forward contact surface of a nut, collar, or flange or combination of these transferring the tensional force applied by a bolt to compressional force upon a working surface around a through hole such as a hole in a shaft flange or other plate element by which a wheel is mounted on a hub on a vehicle such as an automotive truck, as a non-limiting example of use.

FIG. 10 shows an alternative fastener system 1000 mounted on a threaded bolt 1002 and installed and applying a clamping force to join two plate elements 1004 and 1006. The annulus 1020 of the nut 1010 has a tapered forward portion 1022 and a rearward cylindrical portion 1024 connected to a head 1030. The collar 1040 is shown has having a cylindrical smooth interior wall with no inward extending ring (see for comparison the interior ring 206 of the annulus 200 in the above described embodiments). The annulus 1020 has a cylindrical interior wall having an inner diameter dimensioned greater than the outer thread diameter of the bolt such that the annulus does not contact the bolt. The head 1030 is internally threaded in correspondence with the threads of the bolt to engage and turn to tighten and loosen the nut on the bolt to adjust the clamp force of the joint. Note that in FIG. 10, the annulus 1020 of the nut 1010 does not contact the threaded stud or bolt 1002. Engagement of the annulus 1020 with the collar 1040 prevents relative motion between the threads of the stud or bolt 1002 and the threads of the head of the nut, thereby prevention loosening by vibration, without the annulus contacting the bolt thread.

FIG. 11A is a longitudinal view of an alternative fastener system 1100 having at least two examples as shown in FIGS. 11B and 11C, in each of which a nut is mounted on a bolt and installed to a clamping force to join two plate elements. In the first illustrated example of FIG. 11B, the fastener system 1100B joins a first plate element 1102, having a through hole dimensioned to receive and contact the shank of the bolt 1104, to a second plate element 1106, having a through hole dimensioned to have a greater diameter than that of the through hole in the first plate element 1102. The annulus 1108 of the nut 1110 has a tapered forward portion 1112 and a rearward cylindrical portion 1114 connected to a head 1116. The annulus 1108 has a cylindrical smooth interior wall having an inner diameter dimensioned to contact the outer thread diameter of the bolt. The head 1116 is internally threaded in correspondence with the threads of the bolt to engage and turn to tighten and loosen the nut on the bolt to adjust the clamp force of the joint.

In the second illustrated example of FIG. 11C, the fastener system 1100C joins a first plate element 1202, having a through hole dimensioned to receive and contact the unthreaded rearward shank portion of a bolt 1204, to a second plate element 1206, having a through hole dimensioned to have a same or similar diameter than that of the through hole in the first plate element 1202. Thus, the plate elements 1202 and 1206 have a common through hole diameter. The bolt 1204 has a threaded forward shank portion diametrically reduced relative to the unthreaded rearward shank portion. The nut 1110 is described above with reference to FIG. 11B. In FIG. 11C, the rearward cylindrical portion (1114) of the annulus (1108) dimensioned, relative to the common through hole diameter, to contact the interior wall of the through hole of the second plate element 1206. The annulus (1108) has a cylindrical smooth interior wall having an inner diameter dimensioned to contact the reduced (relative to the unthreaded rearward shank portion) outer thread diameter of the threaded forward shank portion the bolt. The head 1116 is internally threaded in correspondence with the threads of the bolt to engage and turn to tighten and loosen the nut on the bolt to adjust the clamp force of the joint.

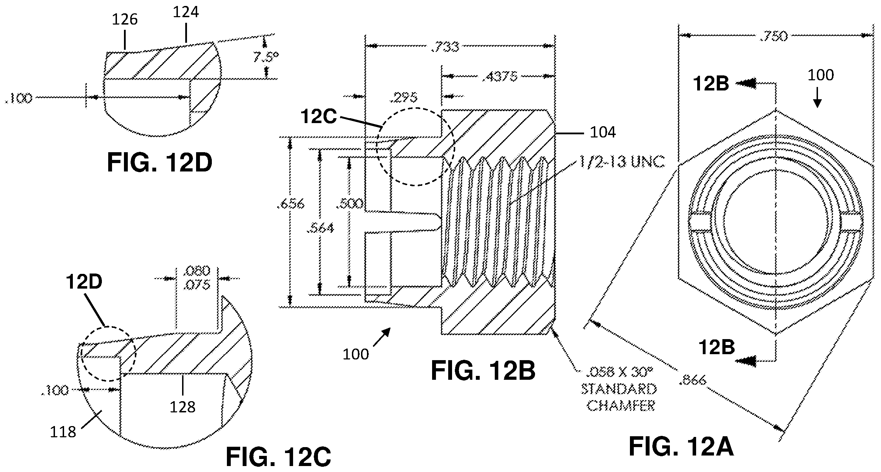

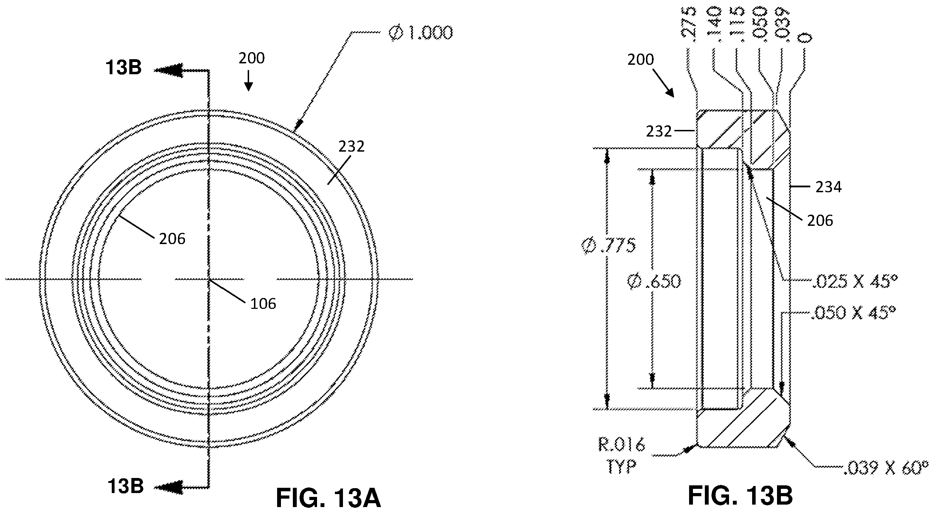

While other dimensions are within the scope of these descriptions and references drawings, particular dimensions are shown in FIGS. 12A-12D to provide dimensions of a nut as non-limiting examples for full description of at least one example of the nut 100 of the fastener system 10 of FIG. 1A. Similarly, all dimensions shown FIGS. 13A-13B are provided as non-limiting examples for full description of at least one example of the collar 200 of the fastener system 10 of FIG. 1A. The dimensions example of FIGS. 12A-12D corresponds to that of FIGS. 13A-13B for use together of the nut and collar of the provided examples.

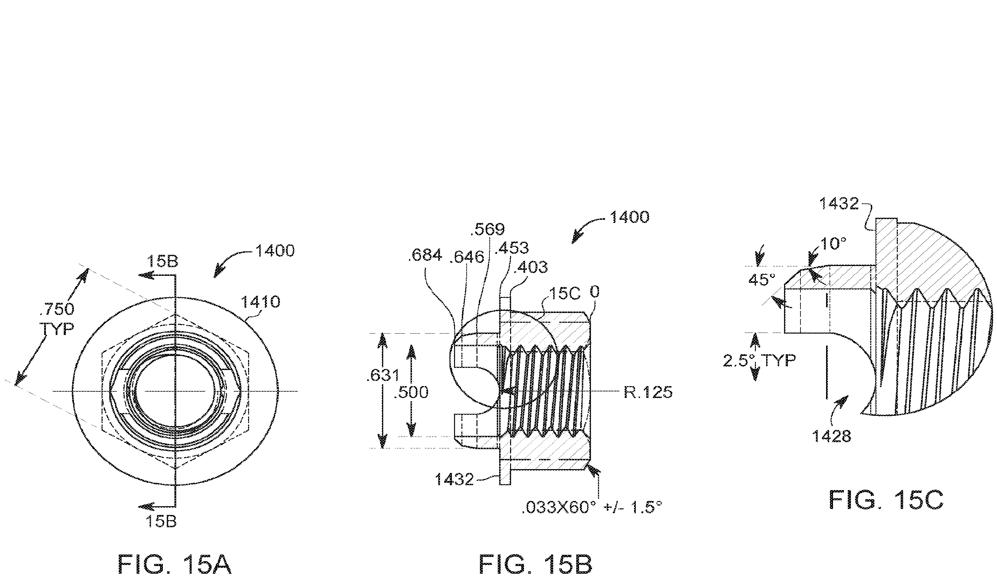

FIGS. 14A and 14B are perspective views of an improved nut 1400 according to at least one embodiment, having an alternative annulus 1420 and a flange 1410, which is intermediate the annulus 1420 and head 1430 and extends radially or laterally outward relative thereto. As shown in FIGS. 15B and 15C, the annulus 1420 has a forward staged outer taper. A terminal forward end portion 1422 of the annulus 1420 has a first taper angle (45 degrees in the example of FIG. 15C) to assist guiding the annulus into a through hole when the nut is mounted on a threaded bolt or stud and advanced. An intermediate portion 1424 of the annulus has a second taper angle (10 degrees in the example of FIG. 15C), which is less than the first taper angle of the forward end portion 1422, to cause radially inward deflection by contact with the inner wall surface of a through hole as the nut 1400 is tightened on a threaded bolt or stud. The rearward end of the annulus is a cylindrical portion 1426 connected to a head 1430 that defines the engagement surface that contacts the inner wall surface of a through hole or collar. The interior of the annulus has a cylindrical interior wall 1418. Diametrically opposed slots 1428 extend longitudinally along the annulus 1420, from the exterior thereof to the interior bore. In the illustrated embodiment, the slots 1428 extend from the forward end 1422 to the flange 1410, such that each portion of annulus is divided into two part-circular or part annular portions. The forward annular face of the flange 1410 seats on a substrate or working surface around a through hole in an arrangement in which a collar is not used. The flange 1410 thereby distributes the load bearing force over its entire forward contact surface 1432. All dimensions shown FIGS. 15A-15C are provided as non-limiting examples for full description of at least one example of the improved nut 400 of FIGS. 14A-14B.

Particular embodiments and features have been described with reference to the drawings. It is to be understood that these descriptions are not limited to any single embodiment or any particular set of features, and that similar embodiments and features may arise or modifications and additions may be made without departing from the scope of the appended claims.

## Claims

1. A vibration resistant fastening system (10) for attaching a working surface to a threaded stud (12), the stud extending longitudinally through a hole (16) defined through the working surface (14), the fastening system comprising:
a nut (100) comprising a forward annulus (120), a rearward head (130), and a staged interior bore (108) extending longitudinally through the head and annulus, the head including a threaded interior for engaging the threaded stud, the threaded interior of the head (130) defining a rearward section of the staged bore (108), wherein the annulus (120) comprises:
an exterior including a cylindrical portion (122) extending longitudinally forward from the head (130), and a tapered portion (124) extending longitudinally forward from the cylindrical portion;
a second smooth cylindrical interior wall (128) defining an intermediate section of the staged bore (108) extending within the annulus forward of the rearward section of the staged bore (108) defined by the threaded interior of the head (130);
a first smooth cylindrical interior wall (118) defining a forward section of the staged bore (108) forward of the second smooth cylindrical interior wall (128), wherein the first smooth cylindrical interior wall (118) has a greater inner diameter than that of the second smooth cylindrical interior wall (128); and
multiple slots (132), extending longitudinally along the annulus (120) an entire longitudinal length thereof from a forward end (102) of the annulus (120) to the head (130) such that the annulus (120) is divided into part-annular portions, each slot (132) defined through the annulus from the exterior thereof to the stage bore (108).

2. The vibration resistant fastening system of claim 1, wherein the multiple slots (132) include exactly two diametrically opposed slots.

3. The vibration resistant fastening system of any preceding claim, wherein the exterior of the annulus (120) further comprises a cylindrical forward terminal end portion (126) extending longitudinally forward from the tapered portion (124).

4. The vibration resistant fastening system of claim 3, wherein the first smooth cylindrical interior wall (118) that defines a forward section of the stage bore (108) extends longitudinally along the terminal end portion (126) of the annulus and a forward portion of the tapered portion (124) of the annulus.

5. The vibration resistant fastening system of any preceding claim, further comprising a collar (200) for distributing force from the nut (100) to the working surface (14), the collar comprising:
a forward end (202) including an annular forward contact surface (232) for contacting the working surface around the hole (16) through which the stud (12) extends; and
a rearward end (204) including an annular rearward contact surface (234) for contacting a forward contact surface (134) of the head (130) of the nut (100).

6. The vibration resistant fastening system of claim 5, wherein, upon advance of the annulus (120) into the collar (200), the annulus contacts an interior ring (206) of the collar as the nut (100) is turned on the threaded stud and undergoes an inward deflection due to a radial force applied by the collar (200) to the annulus (120).

7. The vibration resistant fastening system of claim 6, wherein the forward contact surface (134) of the head (130) of the nut (100) is annular and planar.

8. The vibration resistant fastening system of claim 5, wherein the forward contact surface (134) of the head (130) of the nut (100) extends laterally outward relative to the exterior cylindrical portion (122) of the annulus (120).

9. The vibration resistant fastening system of claim 5, wherein an entirety of the forward contact surface (232) of the collar (200) transfers tensional force applied by the stud (12) to compressional force upon the working surface (14) around the hole (16) through which the stud extends.

10. The vibration resistant fastening system of claim 5, wherein the collar (200) further comprises an interior ring (206) extending inward to engage the annulus (120) of the nut (100) in use, and wherein the interior ring (206) comprises a flat surface portion that is parallel to the exterior peripheral wall of the collar (200) and to a smooth cylindrical interior wall (208) that is disposed between the flat surface portion and the forward end (202) of the collar (200).

11. The vibration resistant fastening system of any preceding claim, wherein the nut (100) further comprises a flange (1410) intermediate, and extending laterally outward relative to, the annulus and head.

12. The vibration resistant fastening system of claim 1, wherein the exterior of the annulus further comprises a tapered forward terminal end portion (1422) extending longitudinally forward from said tapered portion (1424), such that the annulus (1420) has a forward staged outer taper, and
wherein: the forward terminal end portion (1422) has a first taper angle; said tapered portion (1424) has a second taper angle; and the second taper angle is less than the first taper angle.

## Patentansprüche

1. Vibrationsbeständiges Befestigungssystem (10) zum Befestigen einer Arbeitsfläche an einem Gewindebolzen (12), wobei sich der Bolzen längslaufend durch eine durch die Arbeitsfläche (14) hindurch definierte Öffnung (16) erstreckt, wobei das Befestigungssystem Folgendes umfasst:
eine Mutter (100), die einen vorderen Ringraum (120), einen hinteren Kopf (130) und eine gestufte Innenbohrung (108) umfasst, die sich längslaufend durch den Kopf und den Ringraum erstreckt, wobei der Kopf eine gewundene Innenseite zum Eingreifen mit dem Gewindebolzen einschließt, wobei die gewundene Innenseite des Kopfes (130) einen hinteren Teilabschnitt der gestuften Bohrung (108) definiert, wobei der Ringraum (120) Folgendes umfasst:
eine Außenseite, die einen zylindrischen Abschnitt (122), der sich längslaufend vom Kopf (130) ausgehend nach vorne erstreckt, einen verjüngten Abschnitt (124) einschließt, der sich längslaufend vom zylindrischen Abschnitt ausgehend nach vorne erstreckt;
eine zweite glatte zylindrische Innenwand (128), die einen mittleren Teilabschnitt der gestuften Bohrung (108) definiert, der sich innerhalb des Ringraums vor dem hinteren Teilabschnitt der von der gewundenen Innenseite des Kopfes (130) definierten gestuften Bohrung (108) erstreckt;
eine erste glatte zylindrische Innenwand (118), die einen vorderen Teilabschnitt der gestuften Bohrung (108) vor der zweiten glatten zylindrischen Innenwand (128) definiert, wobei die erste glatte zylindrische Innenwand (118) einen größeren Innendurchmesser aufweist als jener der zweiten glatten zylindrischen Innenwand (128); und
mehrere Schlitze (132), die sich längslaufend entlang des Ringraums (120) über eine gesamte Länge desselben ausgehend von einem vorderen Ende (102) des Ringraums (120) zum Kopf (130) so erstrecken, dass der Ringraum (120) in teilringförmige Abschnitte unterteilt ist, wobei jeder Schlitz (132) durch den Ringraum von der Außenseite desselben zur gestuften Bohrung (108) definiert ist.

2. Vibrationsbeständiges Befestigungssystem nach Anspruch 1, wobei die mehreren Schlitzen (132) genau zwei diametral gegenüberliegende Schlitze einschließen.

3. Vibrationsbeständiges Befestigungssystem nach einem vorstehenden Anspruch, wobei die Außenseite des Ringraums (120) weiter einen zylindrischen vorderen Anschlussendabschnitt (126) umfasst, der sich längslaufend vom verjüngten Abschnitt (124) nach vorne erstreckt.

4. Vibrationsbeständiges Befestigungssystem nach Anspruch 3, wobei die erste glatte zylindrische Innenwand (118), die einen vorderen Teilabschnitt der gestuften Bohrung (108) definiert, sich längslaufend entlang des Anschlussendabschnitts (126) des Ringraums und eines vorderen Abschnitts des verjüngten Abschnitts (124) des Ringraums erstreckt.

5. Vibrationsbeständiges Befestigungssystem nach einem vorstehenden Anspruch, weiter umfassend einen Kranz (200) zum Verteilen einer Kraft von der Mutter (100) auf die Arbeitsfläche (14), wobei der Kranz Folgendes umfasst:
ein vorderes Ende (202), das eine ringförmige vordere Kontaktfläche (232) zum Kontaktieren der Arbeitsfläche um die Öffnung (16), durch die sich der Bolzen (12) erstreckt, einschließt; und
ein hinteres Ende (204), das eine ringförmige hintere Kontaktfläche (234) zum Kontaktieren einer vorderen Kontaktfläche (134) des Kopfes (130) der Mutter (100) einschließt.

6. Vibrationsbeständiges Befestigungssystem nach Anspruch 5, wobei der Ringraum bei einem Vorschub des Ringraums (120) in den Kranz (200) einen inneren Ring (206) des Kranzes kontaktiert, während die Mutter (100) auf dem Gewindebolzen gedreht wird und aufgrund einer von dem Kranz (200) auf den Ringraum (120) angelegten radialen Kraft einer nach innen gerichteten Ablenkung unterzogen wird.

7. Vibrationsbeständiges Befestigungssystem nach Anspruch 6, wobei die vordere Kontaktfläche (134) des Kopfes (130) der Mutter (100) ringförmig und eben ist.

8. Vibrationsbeständiges Befestigungssystem nach Anspruch 5, wobei sich die vordere Kontaktfläche (134) des Kopfes (130) der Mutter (100) in Bezug auf den äußeren zylindrischen Abschnitt (122) des Ringraums (120) seitlich nach außen erstreckt.

9. Vibrationsbeständiges Befestigungssystem nach Anspruch 5, wobei eine Gesamtheit der vorderen Kontaktfläche (232) des Kranzes (200) eine von dem Bolzen (12) angelegte Spannungskraft in eine Druckkraft auf die Arbeitsfläche (14) um die Öffnung (16), durch die sich der Bolzen erstreckt, überträgt.

10. Vibrationsbeständiges Befestigungssystem nach Anspruch 5, wobei der Kranz (200) weiter einen inneren Ring (206) umfasst, der sich nach innen erstreckt, um im Gebrauch den Ringraum (120) der Mutter (100) in Eingriff zu bringen, und wobei der innere Ring (206) einen Abschnitt mit flacher Fläche umfasst, der parallel zur Außenumfangswand des Kranzes (200) und zu einer glatten zylindrischen Innenwand (208) ist, die zwischen dem Abschnitt mit flacher Fläche und dem vorderen Ende (202) des Kranzes (200) angeordnet ist.

11. Vibrationsbeständiges Befestigungssystem nach einem vorstehenden Anspruch, wobei die Mutter (100) weiter einen Flansch (1410) umfasst, der zwischen dem Ringraum und Kopf liegt und sich in Bezug auf diese seitlich nach außen erstreckt.

12. Vibrationsbeständiges Befestigungssystem nach Anspruch 1, wobei die Außenseite des Ringraums weiter einen verjüngten vorderen Abschlussendabschnitt (1422) umfasst, der sich vom verjüngten Abschnitt (1424) ausgehend längslaufend so nach vorne erstreckt, dass der Ringraum (1420) eine vordere gestufte äußere Verjüngung aufweist, und
wobei: der vordere Abschlussendabschnitt (1422) einen ersten Verjüngungswinkel aufweist; der verjüngte Abschnitt (1424) einen zweiten Verjüngungswinkel aufweist; und der zweite Verjüngungswinkel kleiner ist als der erste Verjüngungswinkel.

## Revendications

1. Système (10) de fixation résistant aux vibrations pour fixer une surface de travail à un goujon (12) fileté, le goujon s'étendant longitudinalement à travers un trou (16) défini à travers la surface (14) de travail, le système de fixation comprenant :
un écrou (100) comprenant un anneau (120) avant, une tête (130) arrière, et un alésage (108) intérieur étagé s'étendant longitudinalement à travers la tête et l'anneau, la tête incluant un intérieur fileté pour mettre en prise le goujon fileté, l'intérieur fileté de la tête (130) définissant une section arrière de l'alésage (108) étagé, dans lequel l'anneau (120) comprend :
un extérieur incluant une partie (122) cylindrique s'étendant longitudinalement vers l'avant à partir de la tête (130), et une partie (124) conique s'étendant longitudinalement vers l'avant à partir de la partie cylindrique ;
une seconde paroi (128) intérieure cylindrique lisse définissant une section intermédiaire de l'alésage (108) étagé s'étendant à l'intérieur de l'anneau vers l'avant de la section arrière de l'alésage (108) étagé définie par l'intérieur fileté de la tête (130) ;
une première paroi (118) intérieure cylindrique lisse définissant une section avant de l'alésage (108) étagé vers l'avant de la seconde paroi (128) intérieure cylindrique lisse, dans lequel la première paroi (118) intérieure cylindrique lisse présente un diamètre interne supérieur à celui de la seconde paroi (128) intérieure cylindrique lisse ; et
de multiples fentes (132), s'étendant longitudinalement le long de l'anneau (120) sur toute une longueur longitudinale de celui-ci depuis une extrémité (102) avant de l'anneau (120) jusqu'à la tête (130) de sorte que l'anneau (120) soit divisé en parties partiellement annulaires, chaque fente (132) étant définie à travers l'anneau de l'extérieur de celui-ci jusqu'à l'alésage (108) étagé.

2. Système de fixation résistant aux vibrations selon la revendication 1, dans lequel les multiples fentes (132) incluent exactement deux fentes diamétralement opposées.

3. Système de fixation résistant aux vibrations selon une quelconque revendication précédente, dans lequel l'extérieur de l'anneau (120) comprend en outre une partie d'extrémité (126) terminale avant cylindrique s'étendant longitudinalement vers l'avant à partir de la partie (124) conique.

4. Système de fixation résistant aux vibrations selon la revendication 3, dans lequel la première paroi (118) intérieure cylindrique lisse qui définit une section avant de l'alésage (108) étagé s'étend longitudinalement le long de la partie d'extrémité (126) terminale de l'anneau et d'une partie avant de la partie (124) conique de l'anneau.

5. Système de fixation résistant aux vibrations selon une quelconque revendication précédente, comprenant en outre un collier (200) pour répartir la force de l'écrou (100) sur la surface (14) de travail, le collier comprenant :
une extrémité (202) avant incluant une surface (232) de contact avant annulaire pour entrer en contact avec la surface de travail autour du trou (16) à travers lequel s'étend le goujon (12) ; et
une extrémité (204) arrière incluant une surface (234) de contact arrière annulaire pour mettre en contact une surface (134) de contact avant de la tête (130) de l'écrou (100).

6. Système de fixation résistant aux vibrations selon la revendication 5, dans lequel, lors de l'avancement de l'anneau (120) dans le collier (200), l'anneau entre en contact avec une bague (206) intérieure du collier lorsque l'écrou (100) est tourné sur le goujon fileté et subit une déviation vers l'intérieur en raison d'une force radiale appliquée par le collier (200) à l'anneau (120).

7. Système de fixation résistant aux vibrations selon la revendication 6, dans lequel la surface (134) de contact avant de la tête (130) de l'écrou (100) est annulaire et plane.

8. Système de fixation résistant aux vibrations selon la revendication 5, dans lequel la surface (134) de contact avant de la tête (130) de l'écrou (100) s'étend latéralement vers l'extérieur par rapport à la partie (122) cylindrique extérieure de l'anneau (120).

9. Système de fixation résistant aux vibrations selon la revendication 5, dans lequel une totalité de la surface (232) de contact avant du collier (200) transfère une force de tension appliquée par le goujon (12) à une force de compression sur la surface (14) de travail autour du trou (16) à travers lequel le goujon s'étend.

10. Système de fixation résistant aux vibrations selon la revendication 5, dans lequel le collier (200) comprend en outre une bague (206) intérieure s'étendant vers l'intérieur pour mettre en prise l'anneau (120) de l'écrou (100) lors de l'utilisation, et dans lequel la bague (206) intérieure comprend une partie de surface plate qui est parallèle à la paroi périphérique extérieure du collier (200) et à une paroi (208) intérieure cylindrique lisse qui est disposée entre la partie de surface plate et l'extrémité (202) avant du collier (200).

11. Système de fixation résistant aux vibrations selon une quelconque revendication précédente, dans lequel l'écrou (100) comprend en outre une bride (1410) intermédiaire, et s'étendant latéralement vers l'extérieur par rapport à l'anneau et à la tête.

12. Système de fixation résistant aux vibrations selon la revendication 1, dans lequel l'extérieur de l'anneau comprend en outre une partie d'extrémité (1422) terminale avant conique s'étendant longitudinalement vers l'avant à partir de ladite partie (1424) conique, de sorte que l'anneau (1420) présente un cône externe étagé avant, et
dans lequel : la partie (1422) d'extrémité terminale avant présente un premier angle de conicité ; ladite partie (1424) conique présente un second angle de conicité ; et le second angle de conicité est inférieur au premier angle de conicité.
